# EUROPEAN PATENT APPLICATION

(11) **EP 0 978 468 A2**
(43) Date of publication of application: **09.02.2000**
(21) Application number: 99112117.9
(22) Date of filing: 23.06.1999
(51) Int. Cl.: B65H 54/74, F16D 3/78

(54) **Yarn winding device**

(30) Priority: 03.08.1998 JP 21839298
(71) Applicant: MURATA KIKAI KABUSHIKI KAISHA, Kisshoin, Minami-ku Kyoto-shi 601 (JP)
(72) Inventor: Nakagawa, Osamu, Sakyo-ku, Kyoto-shi, Kyoto (JP)
(74) Representative: Liedl, Christine, Dipl.-Chem.

(57) **Abstract**

To prevent the heat generated within a drive motor from being transmitted to a contact roller surface, to prevent package quality from being degraded, and to effectively restrict the transmission of vibrations from a contact roller to a drive motor in a take-up winding device wherein a bobbin B is mounted onto a spindle 5 and the bobbin is rotated to form a package P while a contact roller 10 is pressure-contacted, a drive motor 11 is provided such that the motor shaft 21 is coaxial with the roller shaft 15 of the contact roller 10, and a rotational force is transmitted between the two shafts 15 and 21 via an elastic coupling member 38 made from a heat insulating material having a thermal conductivity of 1.5 kcal/m · h· °C or less.

## Description

### Field of the Invention

The present invention relates to a yarn winding device wherein a motor drives a contact roller that contacts a spindle to which a bobbin is mounted and, in particular, the present invention relates to the drive mechanism of the contact roller.

### Background of the Invention

As one example of a conventional yarn winding device, a take-up winding device is known in which bobbins are mounted to a spindle that may or may not be directly driven, and bobbins are rotated to form a package while a contact roller is pressure-contacted. In recent years, there has been a growing need for a higher winding speed in such yarn winding devices, and the contact roller is auxiliaryly driven for the purpose of maintaining proper slip rate between the package being wound and the contact roller.

However, when the package is wound at a high speed, the contact roller is also rotated and driven at a high speed. Consequently, a large quantity of heat is generated from the drive motor. In particular, the contact roller is auxiliaryly driven to properly maintain a certain winding tension and make sure that the package shape is well formed, and for this reason, the surface speed of the contact roller is set slightly faster than that of the package. That is, assuming that the surface speed of the package is v1, the contact roller coming into contact therewith is driven to rotate at a surface speed of v2, which is somewhat faster than v1. Thus, a large load is applied to a drive motor for the contact roller, and a large quantity of heat is likely to be generated. As described above, because the contact roller rotates with its surface contacting the package, and when heat generated in the drive motor is transmitted to the contact roller surface via a roller shaft, there is a problem that the quality of the package to be formed is degraded due to the heat. In addition, since the temperature rise caused by the heat from the drive motor differs depending on the axial direction and position of the contact roller surface, that is, at a position near the drive motor, the temperature rises markedly, and at a position further away from the drive motor, the temperature does not rise so much, therefore, the packages produced through contact with the same contact roller may vary in quality.

The present invention has been designed in view of these problems, and it is an object of the present invention to provide a yam winding device in which heat generated by the drive motor is prevented from being transmitted to the contact roller surface, thereby eliminating deterioration in package quality due to such heat and differences in quality between a plurality of packages.

### Summary of the Invention

To achieve the above object, the present invention is directed to a yarn winding device wherein a bobbin is mounted to a spindle and the bobbin is rotated to form a package while a contact roller is pressure-contacted, and the yarn winding device has a drive motor for the contact roller provided so that the motor shaft is coaxial to the rotary shaft of the contact roller, and also contains heat insulating material via which a rotational force is transmitted between both shafts.

In the present invention, the rotational force is transmitted between the motor shaft of the drive motor and the rotary shaft of the contact roller via heat insulating material, and the rotational force can be transmitted without contact of metallic members between the shafts, therefore, if a large quantity of heat is generated in the drive motor, and that heat is transmitted toward the contact roller and reaches the motor shaft, the rotational force transmitting section (heat insulating material) for transmitting a rotational force to the rotary shaft of the contact roller is interrupts the heat transfer, thus making it possible to prevent the heat from being transmitted to the rotary shaft of the contact roller and the contact roller surface.

The above mentioned heat insulating material should preferably have a thermal conductivity of 1.5 kcal/m · h · °C or less. In addition, the heat insulating material preferably has elasticity. As a preferred example of such heat insulating material, a non-metallic material such as rubber or resin can be used.

### Brief Description of the Drawing

Figure 1 is a partial sectional side view showing the structure of a yarn winding device.
Figure 2 is a front view showing the structure of the yarn winding device.
Figure 3 is an enlarged sectional view of essential sections of Figure 1.
Figure 4 is a view of a coupling member as seen in the axial direction.
Figure 5 is a view of the coupling member as seen in the direction orthogonal to the axial direction.

### Detailed Description of the Preferred Embodiments

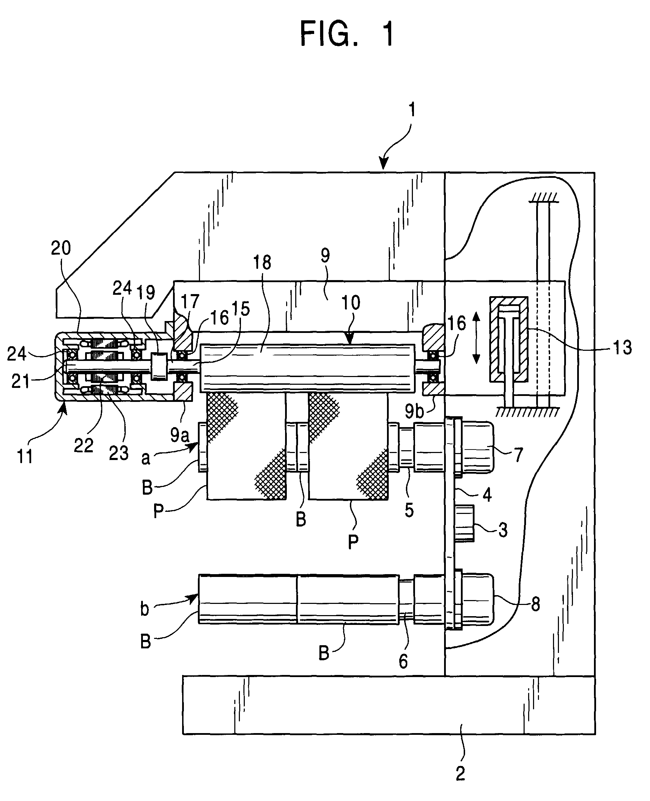

Hereinafter, a preferred embodiment of the present invention will be described with reference to Figures 1 to 5. The present invention is not limited to this embodiment, as other embodiments in the same spirit as the present invention may be envisaged.

As an example of a preferred embodiment of the yarn winding device, a take-up winding device will be described wherein a bobbin is mounted to a spindle that may or may not be directly driven, and the bobbin is rotated while a contact roller is pressure-contacted, and a spun synthetic filament yarn is wound around the bobbin to form a package, with the contact roller being driven by the drive motor.

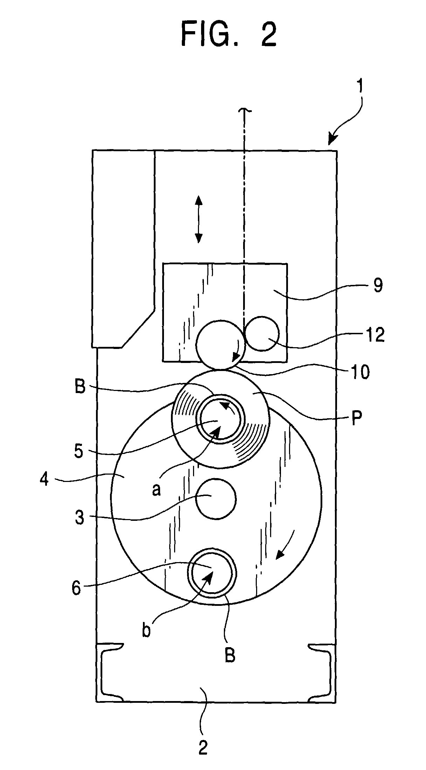

In Figures 1 and 2, a turret type take-up winder 1 will be described by way of example. The take-up winder 1 mainly comprises a turret plate 4 rotated by 180 degrees around a horizontal shaft 3 with respect to a main frame 2, two spindles 5 and 6 at one end supported in a cantilever manner on a front side of the turret plate 4, drive motors 7 and 8 for rotating and driving the spindles 5 and 6 fixed to the rear side of the turret plate 4, a contact roller 10 provided at a roller support member 9 that can be elevated vertically with respect to the main frame 2, an induction motor 11 as a drive motor for the contact roller that rotates and drives the contact roller 10, and a traverse device 12 provided at the roller support member 9. The load of the roller support member 9 is supported by a contact pressure cylinder 13 provided on its base end side, and the pressure differential between the total weight of the elevation section (contact roller 10, induction motor 11, or the like) and the lifting force applied by the contact pressure cylinder 13 is equal to the contact pressure of the contact roller 10 against a plurality of packages P mounted to the spindle 5 positioned at a winding position a. B is a bobbin to be mounted to each of the spindles 5 and 6 at the winding position a and a stand-by position b. In this illustrative embodiment, although the example has two packages P mounted to one of the spindles 5 and 6, four, six or eight packages P may be mounted thereto.

The contact roller 10 is disposed parallel to each of the spindles 5 and 6, and has a cylindrical roller main body 18 that contacts the packages P and a roller shaft 15 that rotates integrally with the roller main body 18. The contact roller 10 is rotatably supported at a part of the roller shaft 15 on both sides of the roller main body 18 by means of a pair of bearings 16, 16, and the pair of bearings 16, 16 is supported at a first support section 9a and a second support section 9b in a single roller support member 9 that is longer than the axial length of the roller main body 18. In the roller support member 9, the free end side of each of the spindles 5 and 6 is represented by the first support section 9a, and the base end side is represented by the second support section 9b. In addition, the contact roller 10 is elastically and movably supported via a sealing member 27 (an elastic body such as a rubber based O-ring) employed as a dampening means disposed around a pair of bearings 16, 16 to a limited extent ε in the up-and-down direction of the roller support member 9. By this up-and-down movement, any vibration due to rotation of the contact roller 10 can be effectively absorbed.

The roller shaft 15 that is a rotating shaft of the contact roller 10 has a roller shaft extended section 17 protruding from the first support section 9a of the roller support member 9, and the induction motor 11 is coupled with the roller shaft extended section 17 via a rotation force transmitting means 19. The induction motor 11 is driven by means of an inverter (not shown in the drawings) comprises of an electronic switching means such as transistor, so that a desired rotation speed can be obtained by controlling that switching means. The induction motor 11 is provided with a rotor 22 securely fixed to a motor shaft 21, a stator 23 securely fixed to a motor housing 20 so as to be opposite to the outside of that rotor 22, and a pair of bearings 24, 24 for rotatably supporting the motor shaft 21 with respect to the motor housing 20 on both sides of the rotor 22.

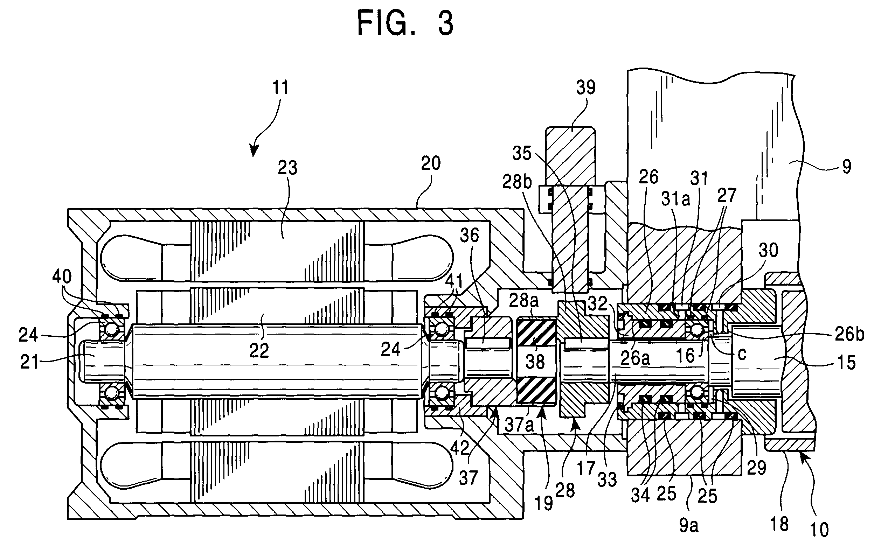

Now, the support structure of the contact roller 10 and the assembly structure of the induction motor 11 (drive motor) will be described in detail with reference to Figure 3.

As shown in Figure 3, the roller shaft 15 protruding from both ends of the roller main body 18 of the contact roller 10 is rotatably supported by means of the bearings 16, 16 supported by the first and second support sections 9a and 9b of the roller support member 9 made of aluminum. Figure 3 shows only the support structure of the first support section 9a, however, a similar support structure is provided in the second support section 9b. The bearing 16 is disposed in an iron sleeve 26 for oil mist, which was interposed in the first support section 9a via a plurality of sealing members 25 (O-rings), and is inserted into a stepped hole 26a in the sleeve 26 via a sealing member 27 (O-ring) that serves as a dampening member. In the sleeve 26, a fine oil mist hole 29 opens onto an oil chamber c partitioned between the bearing 16 and the step section 26b of the stepped hole 26a, and the fine hole 29 connects to an oil tank (not shown in the drawing) via an oil hole 30.

An annular groove 31 for recollecting oil around the outer circumference of the sleeve 26 is formed. A recollecting hole 31a for recollecting lubricating oil ejected to the bearing 16 connects to the annular groove 31, and the annular groove 31 connects to the above oil tank via a suction pipe (not shown in the drawing). Thereby, the low-temperature lubricating oil supplied from the above oil tank is ejected in the form of a mist from the fine hole 29 into the oil chamber c, and is then suctioned by the above suction pipe via the annular groove 31 from the recollecting hole 31a, and ejected to be recollected by the above oil tank. By such a supplying and ejecting lubricating oil means, the lubricating oil is supplied and ejected to the bearing 16, thus making it possible to effectively prevent the temperature of the bearing 16 from rising.

In the sleeve 26, a sleeve 32 is disposed from the bearing 16 to the direction of an aperture end, and the bearing 16 and the sleeve 32 are prevented from being disconnected by means of a snap ring 33 fitted along the aperture end of the sleeve 26. 34 is a sealing member (O-ring) intervened between the sleeve 32 and the sleeve 26. The roller shaft 15 is inserted from the smaller side of the stepped hole 26a of the sleeve 26, and pressed into the bearing 16.

As a result, the contact roller 10 can rotate with respect to the roller support member 9 via the sleeve 26 and is supported elastically in a very small up-and-down movement by elastic deformation of the sealing meter 27.

The roller shaft 15 positioned on the free end side of the spindle 5 has the roller shaft extended section 17 protruded from the first support section 9a of the roller support member 9. At the tip end of the roller shaft extended section 17, a first engagement member 28 is mounted onto the roller 15 in such a way that it cannot rotate. The first engagement member 28 engages a key 35 that engages an axial direction groove formed at the roller shaft extended section 17, thereby enabling it to rotate with the roller 15.

In addition, at the tip end of the motor shaft 21, a second engagement member 37 rotating with the motor shaft 21 is mounted by means of a key 36. Between the first engagement member 28 and the second engagement member 37, a coupling member 38 composed of heat insulating material is provided so as to transmit a rotational force between both of the engagement members, i.e., between the motor shaft 21 and the roller shaft 15.

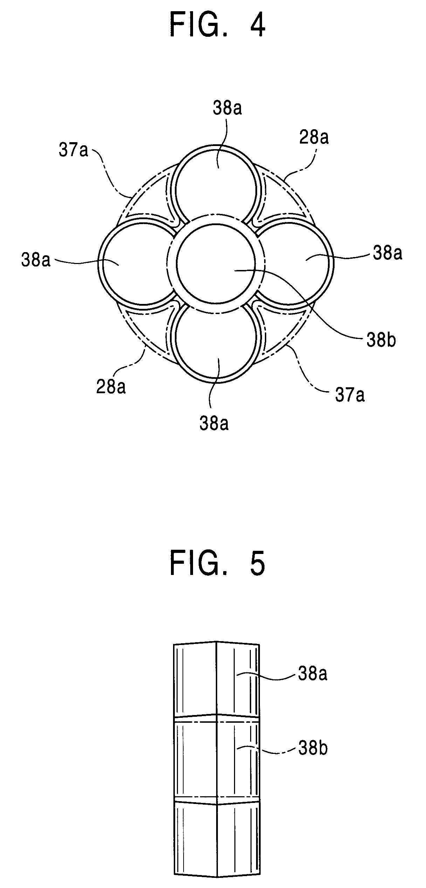

Figures 4 and 5 show an example of the coupling member 38. A plurality of protrusion sections 38a are formed radially at the coupling member 38, and the engagement sections 28a and 37a of the first and second engagement sections 28 and 37 are engaged with a recessed section between the adjacent protrusion sections 38a and 38a. The number of such protrusion sections 38a of the coupling member 38 is not limited, and a rotational force can be transmitted so long as at least two recessed sections between such protrusion sections 38a, 38a are provided. In the example of Figure 4, since four protrusion sections 38a are present at every 90 degrees, the engagement members 28 and 37 each have two engagement sections 28a and 37a, respectively.

The coupling member 38 is provided with a center hole 38b, and when the roller shaft 15 and the motor shaft 21 are coupled together, the tip ends of both of these shafts 15 and 21 are positioned to the outside of the center hole 38b. That is, both of the shafts 15 and 21 are coupled together by the coupling member 38 without any of these shafts 15 and 21 entering the center hole 38b. Thus, the motor shaft 21 and the roller 15, both of which sandwich the coupling member 38, disposed on a coaxial shaft are designed so that rotational force is transmitted without allowing the metallic members of the shafts 15 and 21 to contact each other.

For the coupling member 38, one can use a non-metallic material having a lower thermal conductivity than metal, such as rubber or resin. This thermal conductivity is preferably 1.5 kcal/m · h · °C or less. Thus, the structure for transmitting the rotational force of the motor shaft 21 to the roller shaft 15 is such that both shafts 15 and 21 are coupled by a rotational force transmitting means 19 for transmitting rotational force via the coupling member 38 formed of a heat insulating material. This structure makes it possible to effectively interrupt the heat transmission from the motor shaft 21 to the roller shaft 15.

By using an elastic material as the coupling member 38, vibration from the roller shaft 15 caused by high-speed winding is effectively absorbed, thus making it impossible to transmit such vibrations to the motor shaft 21. When the vibrations of the contact roller 10 increases, the package rotating in contact therewith is deformed, an excessive load is applied to the induction motor 11 by the vibrations, and more heat is generated by the induction motor 11. The heat insulating material for transmitting rotational force is elastic, and the elastic body is deformed, thereby making it possible to absorb vibration transmitted from the roller shaft 15 of the contact roller 10 to the motor shaft 21, and keep the heat generated by the motor to a minimum.

The first engagement member 28 comprises a rotation speed detecting means that detects the rotation speed of the roller shaft 15 in cooperation with a proximity sensor 39. Around the outer circumference of the first engagement member 28 is a gear 28b with radially disposed protrusions, and the proximity sensor 39 is mounted onto the motor housing 20 opposite the gear 28b. The proximity sensor 39 generates a pulse corresponding to the protrusions and recesses of the gear 28b, thereby making it possible to detect the rotation speed of the contact roller 10. Thus, the gear is formed around the outer circumference of the first engagement member 28, thereby obviating the need for an additional gear for rotation speed detection, and in addition, a first engagement member 28 that engages the roller shaft 15 is employed, thereby making it possible to precisely detect the rotation speed of the contact roller 10. If the motor incorporating a rotation speed detecting sensor as a drive motor is employed, it is possible to eliminate the use of the rotation speed detecting means by employing the gear 28b of the first engagement member 28 and the proximity sensor 39. The rotation speed of the spindle 5 at the winding position a is controlled by means of the drive motor 7 so that the rotation speed of the contact roller 10 detected by the above means is substantially constant. In general, the contact roller 10 is controlled so as to be driven at a slightly higher surface speed than the surface speed of the package P mounted to the spindle 5.

Hereinafter, a more detailed description of the motor structure will be given.

Lubricating oil is the supplied to the bearings 24, 24 on both sides of the rotor 22 in a similar manner as that in the bearing 16. The bearing 24 opposite to the roller shaft 15 is inserted into the motor housing 20 via the sealing member 40 (O-ring) serving as a dampening means. In addition, the bearing 24 on the side of the roller shaft 15 is inserted into a sleeve 42 that was inserted into the motor housing 20 via a similar sealing member 41 (O-ring) serving as a dampening means.

In this preferred embodiment, the present invention has been described in the case where it is applied to a take-up winding device 1 as an example of a yarn winding device. However, the present invention may be applied to other cases such as driving the contact roller rotating in contact with the package.

Because of the above-described structure, the present invention provides the following advantages over the prior art.

According to the present invention, since the heat generated in the drive motor will not be transmitted to the contact roller surface, as a result, the packages produced in contact with the contact roller surface are not affected by the heat. Thereby, the package quality will not be degraded, and the packages of uniform quality can be produced.

According to the present invention, since the heat insulating material has a thermal conductivity of 1.5 kcal/m · h · °C or less, the packages are even more certain to not be affected by heat, thus further ensuring that packages of uniform quality are produced.

According to the present invention, the heat insulating material has elasticity, thus making it possible to effectively absorb vibrations produced by the motor and the contact roller due to high speed rotation, and prevents the drive motor from being excessively heated due to the excessive load caused by such vibrations.

## Claims

1. A yarn winding device wherein a bobbin is mounted onto a spindle, and the bobbin is rotated to form a package while a contact roller is pressure-contacted, characterized in that, a drive motor for a contact roller is provided so that a motor shaft is coaxial to a rotary shaft of the contact roller, and a rotational force is transmitted between both of the shafts via heat insulating material.

2. A yarn winding device as claimed in claim 1, characterized in that said heat insulating material has a thermal conductivity of 1.5 kcal/m · h · °C or less.

3. A yarn winding device as claimed in claim 1 or claim 2, characterized in that said heat insulating material has elasticity.
